# EUROPEAN PATENT APPLICATION

(11) **EP 3 040 268 A1**
(43) Date of publication of application: **06.07.2016**
(21) Application number: 14382586.7
(22) Date of filing: 30.12.2014
(51) Int. Cl.: B64C 3/18, B64C 3/20, B64C 5/02

(54) **Stringer stiffened aircraft composite structures**

(71) Applicant: Airbus Operations, S.L., 28906 Getafe (Madrid) (ES)
(72) Inventor: Guinaldo Fernández, Enrique, 28906 GETAFE (Madrid) (ES); García Nieto, Carlos, 28906 GETAFE (Madrid) (ES); Vélez-de-Mendizábal Alonso, Iker, 28906 GETAFE (Madrid) (ES); Ramos García, Luis, 28906 GETAFE (Madrid) (ES); Honorato Ruiz, Francisco Javier, 28906 GETAFE (Madrid) (ES); Cruz Domínguez, Francisco Jose, 28906 Getafe (Madrid) (ES)
(74) Representative: Carpintero Lopez, Francisco

(57) **Abstract**

The present invention refers to a technique for coupling the run-out section of stringers (5) with ribs, frames or other structural elements (1). A structural element (1) of an aircraft composite structure comprises at least one pair of cleats (13a,13a') integrally formed with the structural element (1), wherein the cleats (13a,13a') are configured and relatively arranged with respect to each other, to copy the cross-sectional shape of the stringer (5) run-out section, so that the run-out section of the stringer can be placed within a space defined between the cleats (13a,13a'), and the stringer (5) foot, at its run-out section, is sandwiched between a part of the cleats (13a,13a') and the skin cover (12). The load transfer at the interface between stringer (5) run-outs and the structural element (1) is enhanced, and de-bonding or peeling problems at the stringer (5) run-out section are minimized. The invention applies preferably to a horizontal tail plane having upper and lower skin covers (12,12') obtained as unitary bodies.

## Description

### Object of the invention

The present invention refers in general to aircraft structures stiffened with stringers and obtained from composite materials, such as fuselage sections, lifting surfaces (wings, Horizontal Tale Planes (HTP) or Vertical Tail Planes (VTP)). More specifically, the invention applies preferably to a Horizontal Tail Plane (HTP) of the Tip-To-Tip type, which includes an improved technique for coupling highly loaded stringers run-out section with ribs, frames or other structural elements of the structure.

An object of the invention is to enhance load transfer at the interface between stringers run outs and an structural element, in order to:
- Delay or avoid stringer foot peeling or de-bonding at its run-out section,
- Minimize assembly time and manufacturing cost.

### Background of the invention

Composite skins stiffening configurations normally require the interruption of some stringers as they get close to other structural element, such as beams, ribs, spars, or frames. The ending of the stringer, known as stringer run-out, causes the local load redistribution between the stringer foot and the skin, potentially producing peeling and de-bonding defects at the ending bond line of the stringer run-out, causing thereby structural problems.

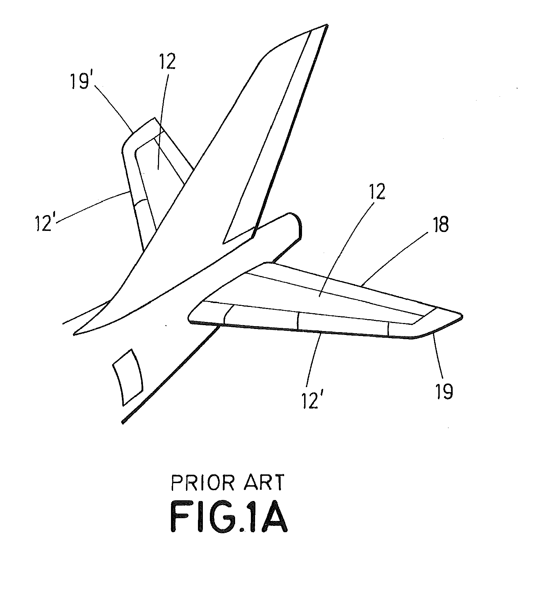

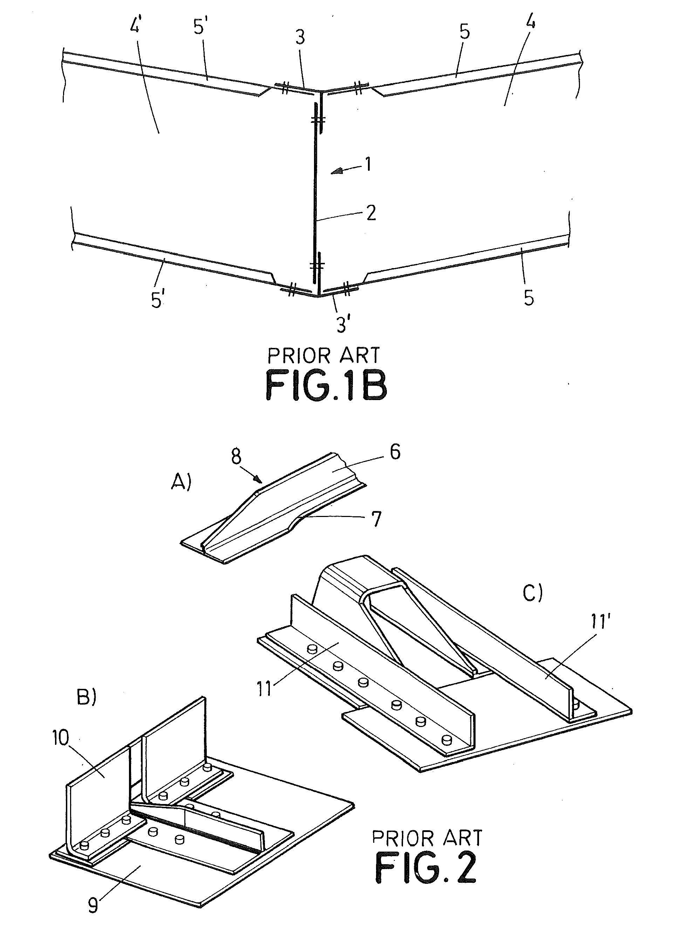

Both fuselage and lifting surfaces (wings, HTP, VTP) have stringer run-outs at their interfaces with frames, beams and ribs. A special case is a horizontal tail plane (18) as the one shown in figure 1 formed by two lateral torsion boxes (4,4') joined to each other at the central region of the HTP, wherein a central rib (1) as structural element is provided.

The central rib (1) consist in this case in a "I" shaped rib having a web (2) and upper and lower flanges (3,3') respectively provided at the upper and lower edges of the web (2). Conventionally, these upper and lower flanges (3,3') are titanium T-joints bolted or riveted to the web (2) in order to avoid the inspection inside the box and take advantage of the mechanical properties of the titanium alloys, but it is known that titanium is a heavy and expensive material.

Additionally, two independent upper skin covers and two independent lower skin covers are provided respectively for the first and second torsion boxes (4,4'), such as the skin covers are respectively joined to these flanges. The skin covers are stiffened by a plurality of stringers (5,5') which are terminated in a run-out section nearby the central rib (1), that is, the run-outs are not fixed to the central rib (1). It can be noted that a large number of highly loaded stringers run-outs are concentrated at the central region of the HTP.

Known solutions to avoid or mitigate the above-mentioned peeling and de-bonding problems in co-cured or co-bonded composite stringers stiffened panels, rely on a combination of the following techniques: stringer widened foot, stringer foot and skin riveting, and extended stringer foot to the interface with the structural part in order to rivet all the parts together.

In some particular cases of highly loaded stringers, it is required the assembly of stabilization cleats to reinforce the joint between the stringers run outs and the structural element; these cleats are riveted or bolted to the stringer and to the structural element.

Figure 2 shows typical run-out coupling concepts of the prior art, wherein drawing 1A shows a run-out section (8) of a T-shaped stringer having a web (6) with a tapered termination and a foot (7) widened at its end section. Drawing 2B shows a run-out section of a T-shaped stringer joined to a skin cover (9) and bolted or riveted with a structural element (10) and with the skin (9) to avoid de-bonding problems. Drawing 2C shows the run-out section of an omega stringer bolted to a skin panel by means of two cleats (11,11').

There is the need in this technical field, for improved solutions to avoid or delay de-bonding or peeling problems in highly loaded stringers run-outs, without significantly increasing the assembly time and manufacturing cost of these structures.

### Summary of the invention

The invention refers to aircraft structures, preferably a Tip-To-Tip horizontal tail plane, stiffened with stringers and obtained from composite materials, wherein a plurality of stringers are joined by a co-curing or a co-bonding process to skin covers of the structure to stiffen the same. The stringers have a foot and a web and a run-out section at one of its ends.

The structural element preferably is a "C" or "I" shaped element having a web and upper and lower flanges at the edges of the web, such as skin covers of the structure are respectively joined to these flanges.

According to the invention, the structural element is manufactured to incorporate at least one pair of cleats, being these cleats an integral part of the structural element. The cleats and the structural element are both obtained as preforms of Carbon Fiber Reinforced Plastic (CFRP), which are then co-cured together. Alternatively, these two elements can be co-bonded, or obtained by a Resin Transfer Molding (RTM) manufacturing process as one shot part.

The cleats of the pair of cleats, are joined to one of the two lateral surfaces of the structural element web, and are transversally arranged with respect to the web.

The cleats are configured and relatively arranged with respect to each other, in such a manner that a stringer run-out can be fitted within the space defined between the two cleats of the same pair. Additionally, these cleats are configured and relatively arranged to define an interface surface matching a surface of a stringer foot at is run-out section, so that a stringer run-out section can be sandwiched between a part of the cleats and the skin cover. Additionally, the stringer foot is co-cured or co-bonded to the cleats and to the skin cover.

Preferably, the cleats of said pair of cleats are additionally configured and relatively arranged with respect to each other, to copy an outer surface of the stringer web at its run-out, so that the stringer run-out tightly fit within the pair of cleats, and this part of the web is also joined to both cleats.

The technical effect of having a pair of cleats configured and arranged to copy the cross-sectional shape of the stringer run-out, is that a larger interface area between the stringer run-out out, skin cover and the structural element is obtained, such as the load transfer or distribution between these three elements is enhanced, taking into account that the cleats are an integral part of the structural element. Additionally, since a part of the stringer foot is sandwiched between a part of the cleats and the skin cover, de-bonding or peeling problems at the run-out are avoided.

A preferred embodiment of the above-described structure according to the invention, is a Tip-To-Tip horizontal tail plane (HTP) for an aircraft. These tips are shown in drawing 1A, where it can be noted that the HTP (18) has a left tip (19) and a right tip (19'), wherein the term Tip-To-Tip means that the upper and lower skin covers of the HTP are obtained from a composite material as a unitary body, for example by means of an automated composites manufacturing process, such as the upper and lower skin covers extend continuously from one tip (or near that tip) to the other tip (or near that tip) of the HTP.

The horizontal tail plane comprises first and second lateral torsion boxes joined to each other at a central region of the horizontal tail plane, and symmetrically arranged with respect to the axis of symmetry of the horizontal tail plane.

The central rib of the HTP is manufactured to have a first group of cleats pairs at a lateral surface of its web, and a second group of cleats pairs at the other lateral surface of its web. The run-out section of each stringer of the upper and lower skin covers, is individually fitted within a pair of cleats. Upper and lower skin covers are respectively joined to the upper and lower flanges of the central rib.

The invention is preferably applicable to structures including covers stiffened with omega stringers, but it can also be applied to structures with T stringers stiffened covers.

### Brief description of the drawings

Preferred embodiments of the invention are henceforth described with reference to the accompanying drawings, in which:
Figure 1.- shows in drawing A a perspective view of the rear section of an aircraft including an horizontal tail plane (HTP), and drawing B shows a schematic representation in cross-sectional view of a central section of a HTP according to the prior art.
Figure 2.- shows typical run-out couplings of the prior art.
Figure 3.- shows a perspective view of a part of a structure according to the invention.
Figure 4.- shows is a top plan view of a central area of an HTP structure according to the invention.
Figure 5.- shows a schematic representation in cross-sectional view of a central section of a HTP according to the invention.
Figure 6.- shows an elevational cross-sectional view several alternatives 1, 2, 3 of cleats designs for coupling run-outs and skin cover. The figure shows the co-bonded or co-cured interface surfaces between cleats, stringers web and/or foot, and skin cover.
Figure 7.- shows corresponding elevational views and top plan views, of the process of integrating the cleats with a structural element, for a three stringers stiffened skin and for the three configurations 1, 2 and 3.
Figure 8.- shows in drawing A a similar representation than figure 3 without the stringers, but including externals cleats. Drawing B is a perspective view of these external cleats.
Figure 9.- shows in a similar representation than figure 8, a preferred embodiment having external cleats with common upper flanges between consecutive pair of cleats.
Figure 10.- shows in a similar representation than figure 8, a preferred embodiment having external cleats with common lower flanges between consecutive pair of cleats.

### Preferred embodiment of the invention

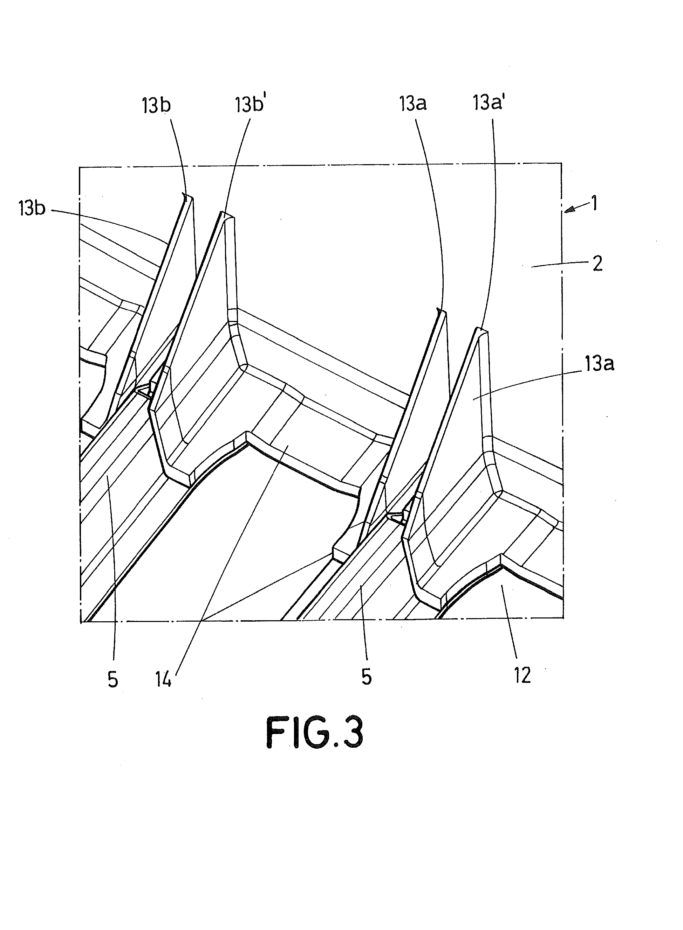

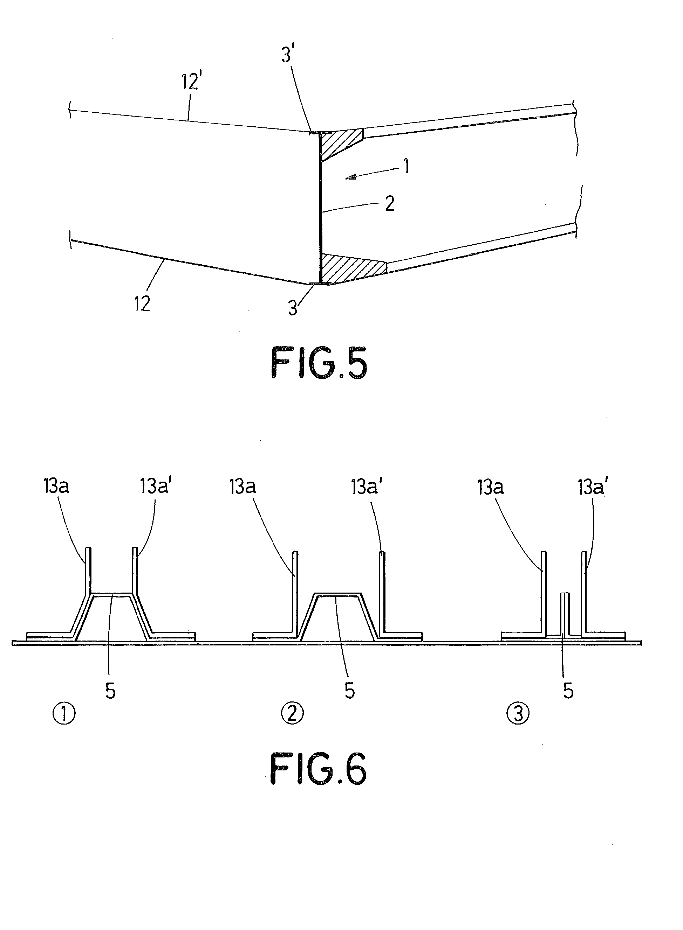

Figures 3, 4 and 5 show a preferred embodiment of an aircraft composite structure stiffened with stringers, in particular a horizontal tail plane (HTP) for an aircraft, wherein the HTP has a Tip-To-Tip configuration, and comprises first and second lateral torsion boxes) (4,4') joined to each other at a central region of the HTP, wherein a central rib (1) is arranged along the axis of symmetry (X) of the horizontal tail plane. Upper and lower skin covers (12,12') obtained from a composite material as an unitary body (as shown in figure 5), extend continuously from one tip to the other tip of the HTP (or near those tips), and are respectively joined to upper and lower flanges (3,3') of the central rib (1). Conventionally, a plurality of omega stringers (5,5') are provided in each torsion box (4,4') to stiffen upper and lower skin covers (12,12') in a know manner. That is, there is a first group of stringers for the left part of the upper skin cover, a second group of stringers for the right part of the upper skin cover, a third group of stringers for the left part of the lower skin cover, and a fourth group of stringers for the right part of the lower skin cover.

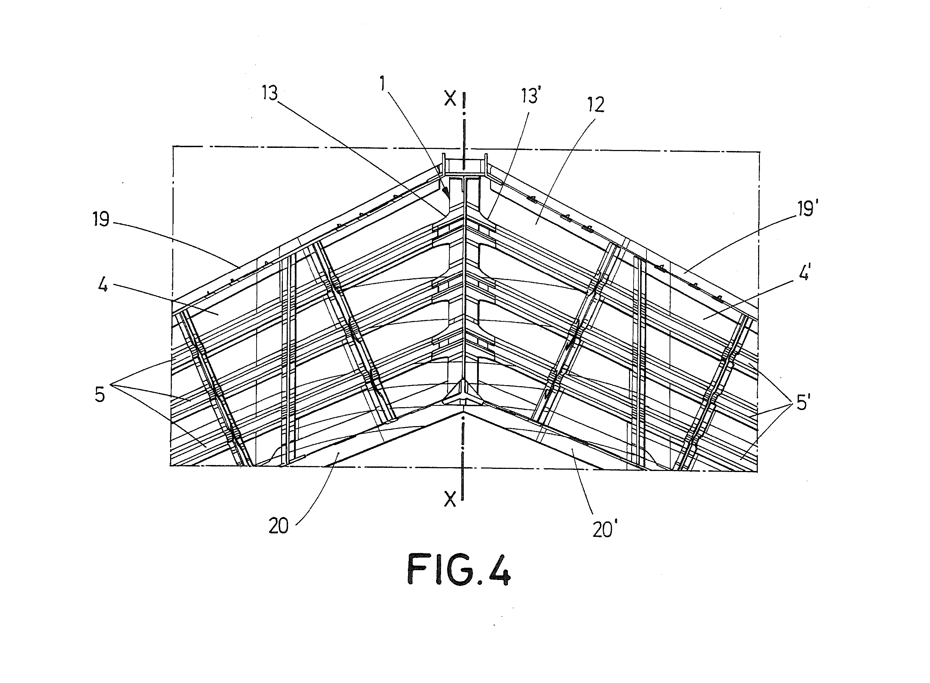

Each torsion box (4,4') is formed respectively by front and read spars (19,20),(19',20') which are joined at their inner ends, as shown in figure 4.

A first group of pair of cleats (13a,13b) are integrally formed on a lateral surface of the central rib web (2), and a second group of pair of cleat (13'a, 13'b) are integrally formed on the other lateral surface of that web (2). The number of pair of cleats is the same as the number of stringers, and the pair of cleats are positioned in the central rib, such as each stringer run-out section is received within a pair of cleats as shown in figure 4. This configuration of cleats pairs and central rib, is shown in figures 3 and 4 for the lower skin cover of the HTP, but the same configuration and arrangement of component is provided for the upper skin cover of the structure. The central rib (1) including its pairs or cleats is a symmetrical body, as shown in figure 4.

Each pair of cleats (13a,13b) if formed by two individual cleats (13a,13a'),(13b,13b') which are configured and arranged relative to each other to copy the cross-sectional shape of the stringer run-out, such as when a stringer run-out is placed within the pair of cleats, interface surfaces between the two elements are defined on both the stringer web and the foot as shown more clearly in configuration 1 of figure 6. In the alternative configurations 2 and 3 of figure 6, only interfaces surfaces with the stringer foot are provided.

Additionally, as shown more clearly in figure 3, adjacent cleats (13b',13a) of consecutive pair of cleats (13a,13b) are configured to have a common flange (14) placed on one of the flanges (3,3') of the central rib (1) and joined thereto. Also as shown in figure 3, the cleats are additionally configured and arranged to define a gap with respect to the skin cover (12), such as the stringer foot in inserted into that gap and it is sandwiched between the lower part of the cleats and the skin cover. All these elements together are co-cured, co-bonded or joined by a RTM process.

It can be noted that by having the integrated cleats copying the surface of the omega stringer web and/or foot in the run out area, the load transfer between the involved elements is enhanced, and this region of the structure is stabilized.

As shown in figure 6, several cleats configurations 1,2,3 for integrating them in the rib or frame main perform, are foreseen for other practical application. In configuration 1 the cleats have vertical and horizontal flanges and an oblique flange in between, such as both the web and the foot of an omega stringer are copied. In the case of the configurations 2 and 3, the cleats have a L-shaped cross-sectional shape having only vertical and horizontal flanges to contact with the stringer foot only. This last configuration is also suitable for T-shaped stringer as depicted in configuration 3.

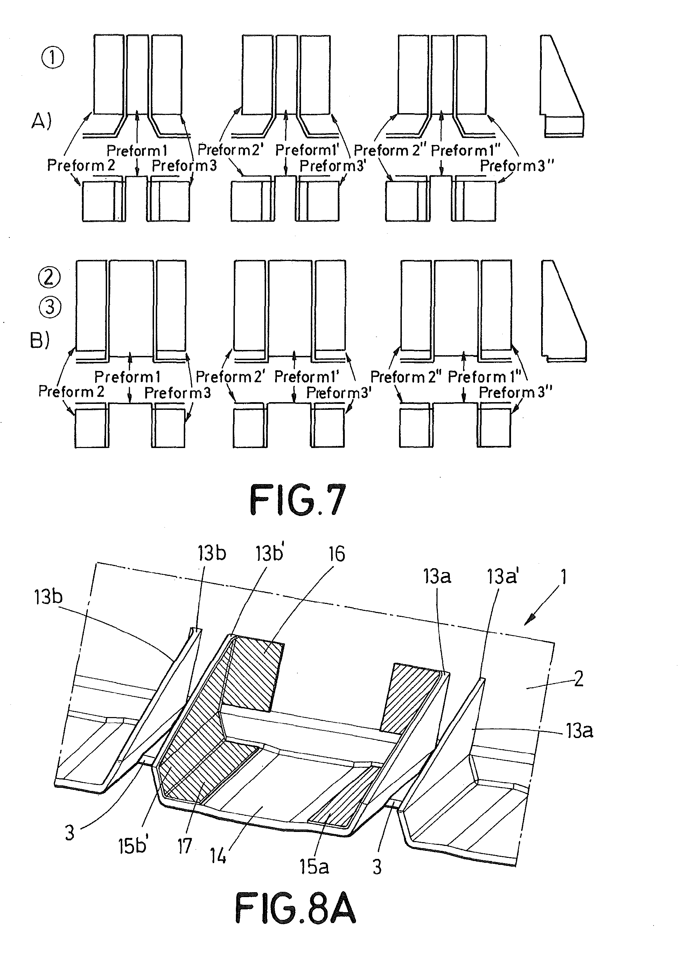

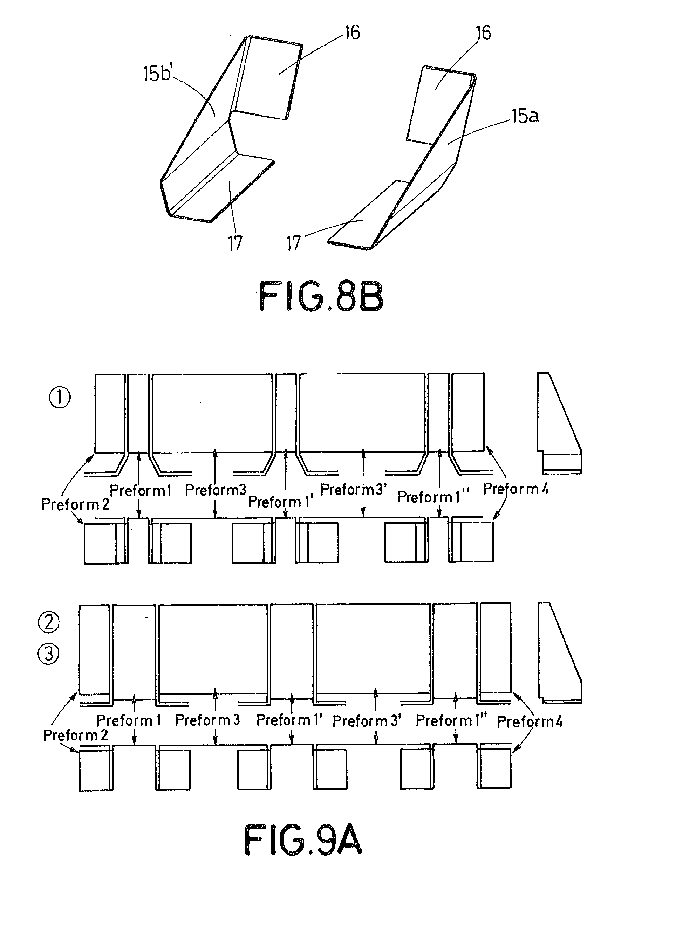

If more stabilization is needed, in the preferred embodiments of figures 7 to 10, external cleats (15b',15a) are applied to reinforce the joint between the cleats and the central rib (1), such as these external cleats are configured to copy the external surface of the cleats as shown clearly in figure 8A, and to have an upper and lower flanges (16,17) overlapping respectively with the central rib web, and with the common flange (14).

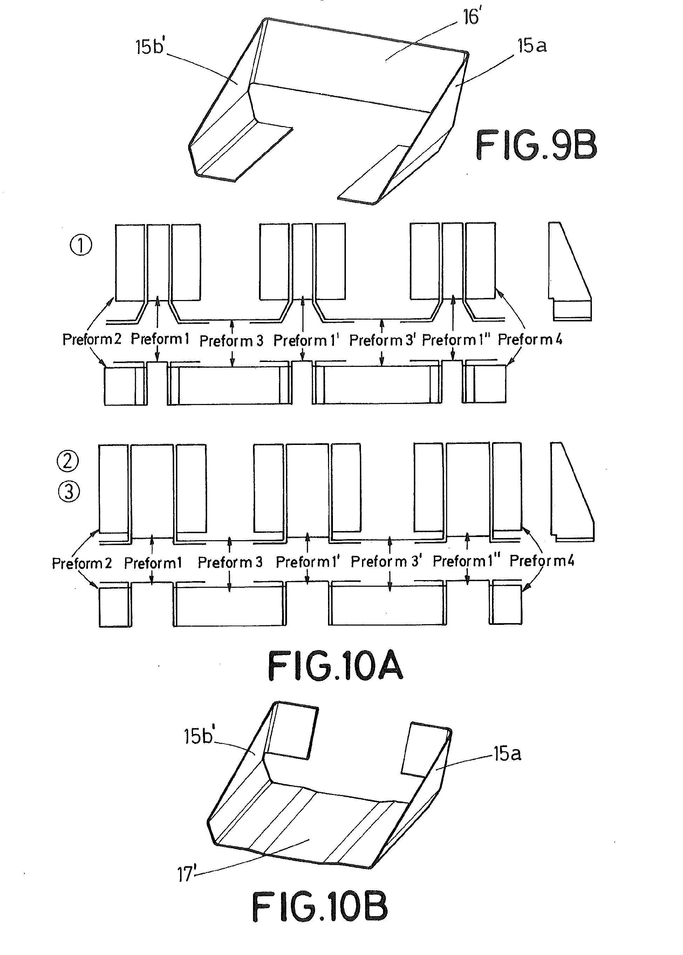

In the embodiment of figure 9, adjacent cleats of consecutive pair of cleats are configured to have a common upper flange (16') extending on a lateral surface of the central rib web (2).

In the embodiment of figure 10, adjacent cleats of consecutive pair of cleats are configured to have a common lower flange (17') extending on the central rib flange (3).

The invention is able to reduce manufacturing costs and times by integrating in one-step process, cleats copying difficult geometries, such as HTP sweep and dihedral angles, as shown for example in the Box-to-Box HTP torsion box concept centre rib of figure 4.

The cleats of the pairs of cleats and the external cleats, can be directly integrated in the central rib, by means of co-curing (if all parts are prepreg), or co-bonding (one part cured/one part fresh), or in RTM/wet prepreg, but also can be assembled by means of traditional riveting.

The preferred alternative in terms of manufacturing cost and time, is co-bonding the structural element (rib, frame or beam) as hard part, and integrating the stabilization cleats structural concept with the fresh prepreg ATL stringer and skin parts assembly in a one shot curing cycle, but nevertheless, co- cured and riveted options are feasible.

Other preferred embodiments of the present invention are described in the appended dependent claims and the multiple combinations of these claims.

## Claims

1. Horizontal tail plane for an aircraft, the horizontal tail plane comprising:
first and second lateral torsion boxes joined to each other at a central region of the horizontal tail plane and symmetrically arranged with respect to the axis of symmetry of the horizontal tail plane,
a central rib obtained from a composite material and arranged along the axis of symmetry of the horizontal tail plane, the central rib having a web and upper and lower flanges at the upper and lower edges of the web,
upper and lower skin covers obtained from a composite material as an unitary body extending from one tip to the other tip of the horizontal tail plane, wherein the upper and lower skin covers are respectively joined to upper and lower flanges of the central rib,
a first group of stringers joined to the upper skin cover and a second group of stringers joined to the lower skin cover, wherein the stringers are obtained from a composite material, and have a foot and a web and a run-out section at one of its ends,
**characterized in that** the central rib has at least a first pair of cleats at a lateral surface of its web, and at least a second pair of cleats at the other lateral surface of its web, and wherein the cleats are integrally formed with the central rib, and are transversally arranged with respect to the web of the same,
wherein the cleats of each pair of cleats are configured and relatively arranged with respect to each other, to define an interface surface matching the shape of a surface of a stringer foot at is run-out section,
and wherein each pair of cleats receives an stringer run-out section, and wherein the stringer foot at its run-out section is joined to and it is sandwiched between a part of the cleats and the upper or lower skin covers.

2. Horizontal tail plane according to claim 1 wherein the cleats have a vertical flange and a horizontal flange with respect to the longitudinal axis of the central rib, and wherein the stringer foot at its run-out section is joined and sandwiched between the cleats horizontal flange and the upper or lower skin cover.

3. Horizontal tail plane according to claim 1 or 2 wherein the cleats of said pair of cleats are additionally configured and arranged relative to each other to define an interface surface matching the outer surface of the stringer web and the stringer foot at its run-out section, and wherein the stringer web at a part of it run-out section is joined to the cleats.

4. Horizontal tail plane according to any of the preceding claims, wherein the stringers are omega-shaped stringers or T-shaped stringers.

5. Horizontal tail plane according to any of the preceding claims, wherein the cleats are co-cured, co-bonded or riveted with the central rib during its manufacturing process.

6. Horizontal tail plane according to any of the preceding claims, wherein adjacent cleats of consecutive pair of cleats are configured to have a common flange placed on one of the flanges of the central rib and joined thereto.

7. Horizontal tail plane according to claim 6, further comprising external cleats joining the cleats and the central rib, wherein these external cleats are configured to copy the external surface of the cleats and to have upper and lower flanges overlapping respectively with the central rib web, and with the common flange.

8. Horizontal tail plane according to any of the preceding claims wherein said upper and lower covers have been obtained by an automated composites manufacturing process as an unitary body.
